# EUROPEAN PATENT APPLICATION

(11) **EP 4 811 502 A1**
(43) Date of publication of application: **23.09.2026**
(21) Application number: 24911062.8
(22) Date of filing: 23.12.2024
(51) Int. Cl.: H01M 50/103, H01M 50/124, H01M 50/593

(54) **BATTERY CELL, BATTERY, AND ELECTRICAL DEVICE**

(30) Priority: 29.12.2023 CN 202323663762 U
(71) Applicant: Contemporary Amperex Technology Co., Limited, Ningde, Fujian 352100 (CN)
(72) Inventor: CHEN, Xiaobo, Ningde, Fujian 352100 (CN); HAO, Yucang, Ningde, Fujian 352100 (CN); HU, Lu, Ningde, Fujian 352100 (CN)
(74) Representative: Ziebig Hengelhaupt Intellectual Property Attorneys Patentanwaltskanzlei PartGmbB
(86) International application number: PCT/CN2024/141572
(87) International publication number: WO 2025/140135

(57) **Abstract**

Embodiments of the present application provide a battery cell, a battery, and an electric device. The battery cell includes a shell, a first insulating member, and a second insulating member. The shell is provided with a first wall. The first insulating member wraps an outer side of the shell. At least a part of the second insulating member is located between the first wall and the first insulating member and covers at least a part of an outer surface of the first wall. The first insulating member wraps the shell, the first wall is a part of the shell, and the first insulating member can provide insulating protection for the first wall of the shell; the second insulating member covers at least a part of the outer surface of the first wall, and the second insulating member can provide insulating protection for at least a part of the first wall; at least a part of the second insulating member is located between the first wall and the first insulating member, and at least a part of the second insulating member and the first insulating member can provide insulating protection for the first wall, thereby enhancing the insulating protection effect of the first wall and improving the reliability of the battery cell.

## Description

### CROSS-REFERENCE TO RELATED APPLICATION

The present application claims priority to Chinese Patent Application No. 202323663762.3 filed on December 29, 2023 and entitled "BATTERY CELL, BATTERY, AND ELECTRIC DEVICE", the content of which is incorporated herein by reference in its entirety.

### TECHNICAL FIELD

The present application relates to the technical field of batteries, and in particular, to a battery cell, a battery, and an electric device.

### BACKGROUND

The primary type of battery used in vehicles is the lithium-ion battery. As a rechargeable battery, the lithium-ion battery has advantages such as a small size, a high energy density, a high power density, long cycle life, and long storage time.

A battery generally includes a battery cell, and the exterior of the battery cell is usually covered with an insulating layer. During the use of the battery cell, a high-intensity electric field is likely to be present around the battery cell, and the high-intensity electric field easily breaks down the insulating layer of the battery cell, resulting in the failure of the insulating layer. How to improve the insulating property of the battery cell to improve the reliability of the battery is an urgent problem to be solved in the battery technology.

### SUMMARY

The present application provides a battery cell, a battery, and an electric device to improve the reliability of the battery cell.

In a first aspect, embodiments of the present application provide a battery cell. The battery cell includes a shell, a first insulating member, and a second insulating member. The shell is provided with a first wall. The first insulating member wraps an outer side of the shell. At least a part of the second insulating member is located between the first wall and the first insulating member and covers at least a part of an outer surface of the first wall.

In the above technical solution, the first insulating member wraps the outer side of the shell, and the first insulating member can provide insulating protection for the shell. At least a part of the second insulating member is located between the first wall and the first insulating member, and the second insulating member covers at least a part of the outer surface of the first wall, such that both the second insulating member and the first insulating member can provide insulating protection for the first wall, thereby enhancing the insulating protection effect of the first wall and improving the reliability of the battery cell.

In some embodiments, the second insulating member is an insulating coating layer disposed on an outer surface of the shell. By providing the insulating coating layer as the second insulating member, the second insulating member can be closely attached to the shell, such that the second insulating member is less likely to fall off the shell, thereby enabling the second insulating member to provide good long-term protection for the first wall. In addition, the insulating coating layer serves as the second insulating member, such that the second insulating member can be more uniformly distributed on the outer surface of the shell.

In some embodiments, the outer surface of the first wall is provided with a recess, and the second insulating member covers the recess. By allowing the second insulating member to cover the recess, the second insulating member can provide insulating protection for the region where the recess is provided, thereby enhancing the insulating property of the recess.

In some embodiments, a part of the second insulating member is located in the recess. By providing a part of the second insulating member in the recess, the second insulating member can be more stably attached to the outer surface of the first wall.

In some embodiments, the second insulating member fills the recess. The second insulating member fills the recess, such that the gas in the recess can be expelled from the recess, thereby reducing the problem of accelerated aging of the second insulating member in the region of the recess due to factors such as partial discharge.

In some embodiments, the first wall forms a weak part in a region where the recess is provided, and the first wall is configured to be capable of cracking along the weak part to release pressure inside the battery cell. The formation of the weak part in the recess is beneficial to the cracking of the weak part when the internal pressure of the battery cell increases, such that the interior of the battery cell communicates with the outside through the cracked weak part, thereby facilitating the release of pressure in the battery cell and reducing the risk of thermal runaway of the battery cell.

In some embodiments, the second insulating member is entirely located between the first wall and the first insulating member. The entire second insulating member and the first insulating member jointly cover the outer surface of the first wall, which is beneficial to improving the insulating property of the first wall.

In some embodiments, a part of the second insulating member is located between the first wall and the first insulating member. By providing a part of the second insulating member between the first wall and the first insulating member, the second insulating member and the first insulating member jointly cover the outer surface of the first wall, thereby improving the insulating property of the first wall. In addition, other parts of the second insulating member may cover other parts of the shell, thereby improving the insulating property of other positions of the shell.

In some embodiments, the shell is further provided with a side wall, the side wall is disposed in an enclosing manner around the first wall, and the first wall is connected to one end of the side wall in a thickness direction of the first wall. The second insulating member includes a first insulating part and a second insulating part, the second insulating part is disposed in an enclosing manner around the first insulating part, the first insulating part is connected to one end of the second insulating part in the thickness direction of the first wall, the first insulating part is located between the first wall and the first insulating member and covers the outer surface of the first wall, the second insulating part is located between the side wall and the first insulating member, and the second insulating part is disposed around the side wall and covers at least a part of an outer surface of the side wall. By providing the first insulating part between the first wall and the first insulating member, the insulating property of the first wall can be enhanced through the first insulating member and the first insulating part. By providing the second insulating part between the side wall and the first insulating member, the insulating property of the side wall can be enhanced through the first insulating member and the second insulating part. By providing the second insulating part in an enclosing manner around the first insulating part, the second insulating part is disposed on the side wall proximal to the first wall, and the first insulating part is connected to one end of the second insulating part in the thickness direction of the first wall, such that the second insulating member can wrap the first wall and the junction between the first wall and the side wall, thereby improving the insulating property of the first wall of the shell and the side wall of the shell at a position proximal to the first wall.

In some embodiments, the second insulating member covers the outer surface of the first wall entirely. By allowing the second insulating member to cover the outer surface of the first wall entirely, the first insulating member and the second insulating member can jointly insulate the outer surface of the first wall entirely, thereby improving the insulating property of the first wall and reducing the risk of breakdown of the insulating layer on the first wall.

In some embodiments, the battery cell further includes an electrode assembly, the electrode assembly is accommodated in the shell, and the first wall is configured to support the electrode assembly. The first wall supports the electrode assembly, the first wall is located at the bottom of the electrode assembly, and the first insulating member and the second insulating member covering the outer surface of the first wall are located at the bottom of the shell. When the shell is supported by an external component, the shell and the external component can be insulated by the first insulating member and the second insulating member.

In some embodiments, the shell includes a shell body and an end cover. The shell body is provided with at least one opening, the end cover is in one-to-one correspondence with the opening, and the end cover closes the opening, where at least one end cover is the first wall. By allowing the second insulating member to cover at least a part of at least one end cover, the first insulating member and the second insulating member can jointly improve the insulating property of the at least one end cover.

In some embodiments, the shell body is provided with only one opening. By allowing the second insulating member to cover the end cover at the opening of the shell body, the insulating property at the end cover of the shell can be improved.

In some embodiments, the shell includes a shell body and an end cover. The shell body is provided with at least one opening, the end cover is in one-to-one correspondence with the opening, and the end cover closes the opening, where the shell body includes the first wall. By allowing the second insulating member to wrap the first wall on the shell body, the insulating property of the first wall on the shell body can be improved.

In some embodiments, the shell body is provided with only one opening, and a wall, opposite to the end cover, of the shell body is the first wall. By providing the wall, opposite to the end cover, of the shell body as the first wall, the insulating property of the first wall can be improved.

In a second aspect, the embodiments of the present application provide a battery. The battery includes a plurality of battery cells according to any one of the embodiments of the first aspect.

In a third aspect, the embodiments of the present application provide an electric device. The electric device includes a plurality of battery cells according to any one of the embodiments of the first aspect, and the battery cells are configured to supply electric energy to the electric device.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a schematic structural diagram of a battery cell according to some embodiments of the present application;
FIG. 5 is an exploded view of a battery cell according to yet some other embodiments of the present application;
FIG. 6 is a schematic structural diagram of a second insulating member in FIG. 5;
FIG. 7 is a schematic structural diagram of a shell in FIG. 5;
FIG. 8 is a schematic structural diagram of a battery cell according to yet some other embodiments of the present application; and
FIG. 9 is a schematic structural diagram of a battery cell according to still some other embodiments of the present application.

The drawings are not drawn to scale.

Description of reference numerals: 1-shell; 11-shell body; 12-end cover; 11a-opening; 13-first wall; 131-recess; 132-weak part; 14-side wall; 15-rounded corner; 2-electrode assembly; 21-tab; 3-electrode terminal; 4-first insulating member; 5-second insulating member; 5a-protrusion; 51-first insulating part; 52-second insulating part; 10-battery cell; 20-case; 201-first portion; 202-second portion; 100-battery; 200-controller; 300-motor; 1000-vehicle; X-first direction; Y-second direction; Z-third direction.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or primary and secondary relationship of the technical features referred to.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "plurality of" refers to two or more (including two). Similarly, "plurality of groups" refers to two or more (including two) groups, and "plurality of pieces" refers to two or more (including two) pieces, unless otherwise explicitly and specifically defined.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

The term "plurality of" used in the present application refers to two or more (including two). Similarly, "plurality of groups" refers to two or more (including two) groups, and "plurality of pieces" refers to two or more (including two) pieces.

In the embodiments of the present application, the battery cell may be a secondary battery. The secondary battery refers to a battery cell that can be reused by activating the active material through charging after the battery cell is discharged.

The battery cell includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode, which can reduce the risk of a short circuit between the positive electrode and the negative electrode while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, a foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the separator is a separation film. For the separation film, any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a multi-prismatic battery, and the multi-prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossbeam and a longitudinal beam of the vehicle.

In some embodiments, the battery may be an energy storage device. The energy storage device includes an energy storage container, an energy storage electrical cabinet, and the like.

For a battery, the battery generally includes a battery cell and an external component. The external component may be used for the fixation, cooling, and the like of the battery cell. For example, the external component may be a case, a support frame, a protection plate, a water cooling plate, or the like. Due to the possibility of the external component carrying high voltage, the battery cell is in a high-intensity electric field environment. The high-intensity electric field affects the reliability of the battery and the service life of the battery.

To improve the insulating property of the battery cell, an insulating member may be disposed on the outer surface of the shell of the battery cell, and the insulating member provides insulating protection for the battery cell under the high-intensity electric field environment. However, the external component is usually disposed facing one wall of the shell of the battery cell. In the high-intensity electric field environment, the part of the insulating member located between the wall and the external component still faces the risk of failure due to breakdown by the high-intensity electric field, affecting the reliability of the battery cell.

In view of this, the embodiments of the present application provide a battery cell. The battery cell includes a shell, a first insulating member, and a second insulating member. The shell is provided with a first wall, the first insulating member wraps outside the shell of the battery cell, and at least a part of the second insulating member is disposed between the first insulating member and the first wall of the shell and covers at least a part of the outer surface of the first wall.

In such a battery cell, by providing the second insulating member between the first insulating member and the first wall, both the first insulating member and the second insulating member can insulate the first wall, thereby enhancing the insulating protection effect of the first wall and improving the reliability of the battery cell.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation, the following embodiments will be described by taking a vehicle as an example of the electric device.

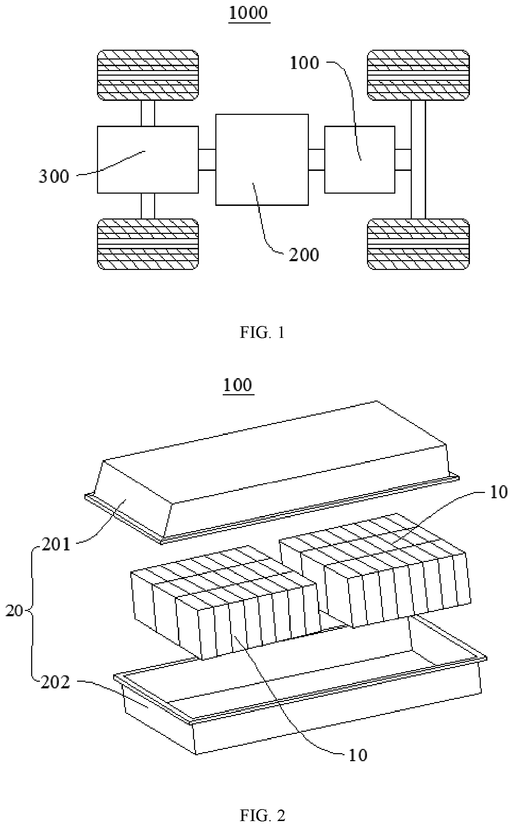

Referring to FIG. 1, FIG. 1 is a schematic structural diagram of a vehicle 1000 according to some embodiments of the present application. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000.

The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a battery cell 10 and a case 20. The case 20 is configured to accommodate the battery cell 10.

The case 20 is a component for accommodating the battery cell 10, the case 20 provides an accommodating space for the battery cell 10, and the case 20 may be of various structures. In some embodiments, the case 20 may include a first portion 201 and a second portion 202. The first portion 201 and the second portion 202 are mutually lidded with each other to define the accommodating space for accommodating the battery cell 10. The first portion 201 and the second portion 202 may be in various shapes, such as a rectangular parallelepiped and a cylinder. The first portion 201 may be of a hollow structure with one side open, the second portion 202 may also be of a hollow structure with one side open, and the open side of the first portion 201 is lidded with the open side of the second portion 202 to form the case 20 having the accommodating space. Alternatively, the first portion 201 may be of a hollow structure with one side open, the second portion 202 may be of a plate-shaped structure, and the open side of the first portion 201 is lidded with the second portion 202 to form the case 20 having the accommodating space. The first portion 201 and the second portion 202 may be sealed by using a sealing element. The sealing element may be a seal ring, a sealant, or the like.

In the battery 100, one or a plurality of battery cells 10 may be provided. If a plurality of battery cells 10 are provided, the plurality of battery cells 10 may be connected in series, in parallel, or in series-parallel. The series-parallel connection means that both series connection and parallel connection are present in the connection of the plurality of battery cells 10. The situation may be that the plurality of battery cells 10 are first connected in series, in parallel, or in series-parallel to form battery 100 modules, and then the plurality of battery 100 modules are connected in series, in parallel, or in series-parallel to form a whole to be accommodated in the case 20. Alternatively, all the battery cells 10 may be directly connected in series, in parallel, or in series-parallel, and then the whole formed by all the battery cells 10 is accommodated in the case 20.

In some embodiments, the battery 100 may further include a busbar component. The plurality of battery cells 10 may be electrically connected to each other through the busbar component to achieve series connection, parallel connection, or series-parallel connection among the plurality of battery cells 10. The busbar component may be a metal conductor, such as copper, iron, aluminum, stainless steel, or an aluminum alloy.

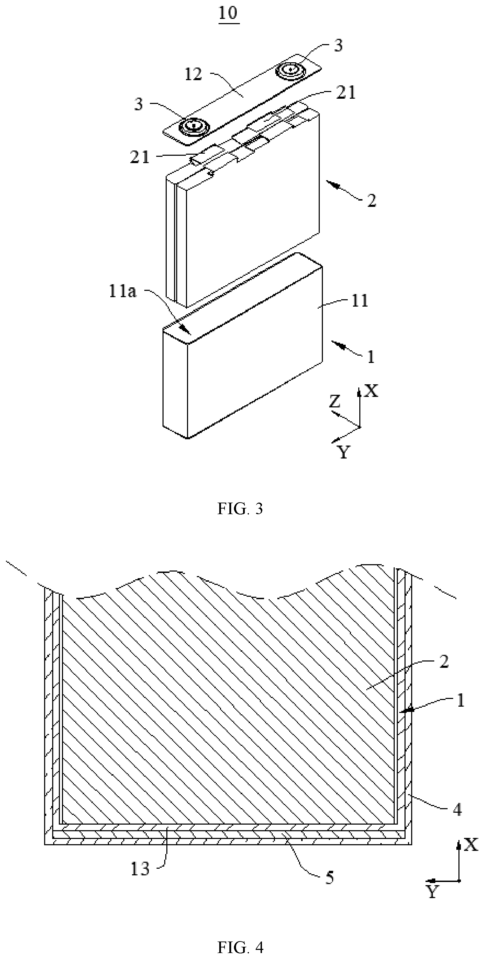

Referring to FIG. 3, FIG. 3 is an exploded view of a battery cell 10 according to some embodiments of the present application. The battery cell 10 may include a shell 1, an electrode assembly 2, and an electrode terminal 3. The electrode assembly 2 is disposed in the shell 1, the electrode terminal 3 is disposed on the shell 1, and the electrode terminal 3 is electrically connected to the electrode assembly 2.

The shell 1 may include a shell body 11 and an end cover 12. The shell body 11 is provided with an opening 11a, and the end cover 12 closes the opening 11a of the shell body 11.

The shell body 11 is a component for accommodating the electrode assembly 2. The shell body 11 may be of a hollow structure with the opening 11a formed at one end, and the shell body 11 may be of a hollow structure with openings 11a formed at two opposite ends. The shell body 11 may be in various shapes, such as a cylinder shape and a rectangular parallelepiped shape. The shell body 11 may be made of various materials, such as copper, iron, aluminum, steel, and an aluminum alloy.

The end cover 12 is a component that closes the opening 11a of the shell body 11 to isolate the internal environment of the battery cell 10 from the external environment. The end cover 12 and the shell body 11 jointly define an accommodating space for accommodating the electrode assembly 2, an electrolytic solution, and other components. The end cover 12 may be connected to the shell body 11 by welding or crimping to close the opening 11a of the shell body 11. The shape of the end cover 12 may be adapted to the shape of the shell body 11. For example, the shell body 11 is of a rectangular parallelepiped structure, and the end cover 12 is of a rectangular plate-shaped structure adapted to the shell body 11. For another example, the shell body 11 is of a cylindrical structure, and the end cover 12 is of a circular plate-shaped structure adapted to the shell body 11. The end cover 12 may also be made of various materials, such as copper, iron, aluminum, steel, an aluminum alloy, and plastic. The end cover 12 and the shell body 11 may be made of the same or different materials.

In an embodiment in which an opening 11a is formed at one end of the shell body 11, one end cover 12 may be correspondingly provided. In an embodiment in which openings 11a are formed at two opposite ends of the shell body 11, two end covers 12 may be correspondingly provided. The two end covers 12 respectively close the two openings 11a of the shell body 11, and the two end covers 12 and the shell body 11 jointly define the accommodating space.

The electrode terminal 3 is disposed on the shell 1, and the electrode terminal 3 is configured to be electrically connected to a tab 21 of the electrode assembly 2 to output electric energy of the battery cell 10. The electrode terminal 3 may be disposed on the shell body 11 of the shell 1 or may be disposed on the end cover 12 of the shell 1. The electrode terminal 3 and the tab 21 may be directly connected. For example, the electrode terminal 3 is welded to the tab 21. The electrode terminal 3 and the tab 21 may also be indirectly connected. For example, the electrode terminal 3 and the tab 21 are indirectly connected through a current collecting member. The current collecting member may be a metal conductor, such as copper, iron, aluminum, steel, or an aluminum alloy.

As an example, as shown in FIG. 3, in the first direction X, an opening 11a is formed at one end of the shell body 11, there is one end cover 12 in the shell 1, and the one end cover 12 closes the opening 11a of the shell body 11. The end cover 12 is provided with two electrode terminals 3, the two electrode terminals 3 are spaced apart from each other in the second direction Y, and the two electrode terminals 3 are a positive electrode terminal 3 and a negative electrode terminal 3, respectively. The two electrode assemblies 2 are arranged in the third direction Z, and a positive electrode tab and a negative electrode tab are formed at one end, facing the end cover 12, of each of the two electrode assemblies 2. The positive electrode terminal 3 is electrically connected to two positive electrode tabs, the negative electrode terminal 3 is electrically connected to two negative electrode tabs, and the first direction X, the second direction Y, and the third direction Z intersect pairwise. The first direction X may be the height direction of the battery cell 10, the second direction Y may be the width direction of the battery cell 10, and the third direction Z may be the thickness direction of the battery cell 10.

According to some embodiments of the present application, referring to FIG. 4, FIG. 4 is a schematic structural diagram of a battery cell 10 according to some embodiments of the present application. The battery cell 10 includes a shell 1, a first insulating member 4, and a second insulating member 5. The shell 1 is provided with a first wall 13. The first insulating member 4 wraps an outer side of the shell 1. At least a part of the second insulating member 5 is located between the first wall 13 and the first insulating member 4 and covers at least a part of an outer surface of the first wall 13.

One or a plurality of first walls 13 may be provided in the shell 1. The situation may be that the end cover 12 of the shell 1 is the first wall 13, or that at least one wall of the shell body 11 of the shell 1 is the first wall 13. Taking the case where the first wall 13 is located on the shell body 11 and the shell body 11 is in a rectangular parallelepiped shape as an example, the first wall 13 may be a wall of the shell body 11 in the width direction of the battery cell 10, a wall of the shell body 11 in the thickness direction of the battery cell 10, or a wall of the shell body 11 in the height direction of the battery cell 10, and at least one end of the shell body 11 in the height direction is provided with an opening 11a. As an example, in FIG. 4, the first wall 13 is a wall of the shell body 11 in the height direction of the battery cell 10.

The first insulating member 4 is a component that insulates and isolates the shell 1 from external components. The first insulating member 4 may be an insulating film, an insulating shell, or the like outside the shell 1. One or a plurality of first insulating members 4 may be provided, and the plurality of first insulating members 4 may jointly wrap the shell 1. For example, one first insulating member 4 covers the outer surface of the shell body 11, and another first insulating member 4 covers the outer surface of the end cover 12. The situation may be that the first insulating member 4 wraps the shell 1 entirely, or that the first insulating member 4 wraps only a part of the shell 1. As an example, the first insulating member 4 is an insulating film, and the first insulating member 4 wraps the shell body 11 of the shell 1 to cover the outer surface of the shell body 11.

The second insulating member 5 is an insulating component disposed between the first insulating member 4 and the shell 1. The first insulating member 4 and the second insulating member 5 may be made of the same material or different materials. The second insulating member 5 may be an insulating coating layer, an insulating film, or the like.

The situation may be that a part of the second insulating member 5 is located between the first insulating member 4 and the first wall 13, and another part is located on the outer side of other walls of the shell 1, or that the second insulating member 5 is entirely located between the first insulating member 4 and the first wall 13. The situation may be that the second insulating member 5 covers the outer surface of the first wall 13 entirely, or that the second insulating member 5 covers a part of the outer surface of the first wall 13.

In the above technical solution, the first insulating member 4 wraps the outer side of the shell 1, and the first insulating member 4 can provide insulating protection for the shell 1. At least a part of the second insulating member 5 is located between the first wall 13 and the first insulating member 4, and the second insulating member 5 covers at least a part of the outer surface of the first wall 13, such that both the second insulating member 5 and the first insulating member 4 can provide insulating protection for the first wall 13, thereby enhancing the insulating protection effect of the first wall 13. When the first wall 13 is disposed facing an external component, even if the external component is in a high-voltage environment, the risk of insulation failure of the battery cell 10 can be reduced, thereby improving the reliability of the battery cell 10.

In some embodiments, referring to FIG. 4, the second insulating member 5 is an insulating coating layer disposed on an outer surface of the shell 1.

The insulating coating layer may be disposed on the outer surface of the shell 1 by means of electrophoresis, spraying, or the like. The insulating coating layer may cover a part of the outer surface of the first wall 13, or may cover the outer surface of the first wall 13 entirely. The insulating coating layer may cover only the outer surface of the first wall 13, or may cover the outer surfaces of other walls in the shell 1 other than the outer surface of the first wall 13.

By providing the insulating coating layer as the second insulating member 5, the second insulating member 5 can be closely attached to the shell 1, such that the second insulating member 5 is less likely to fall off the shell 1. The insulating coating layer serves as the second insulating member 5, such that the second insulating member 5 can be more uniformly distributed on the outer surface of the shell 1.

In some embodiments, the material of the insulating coating layer includes epoxy resin, fluoroplastic, or polyimide.

The material of the insulating coating layer may be made of one of polyimide, epoxy resin, and fluoroplastic as a main component, or may be made of multiple mixtures of polyimide, epoxy resin, and fluoroplastic as main components.

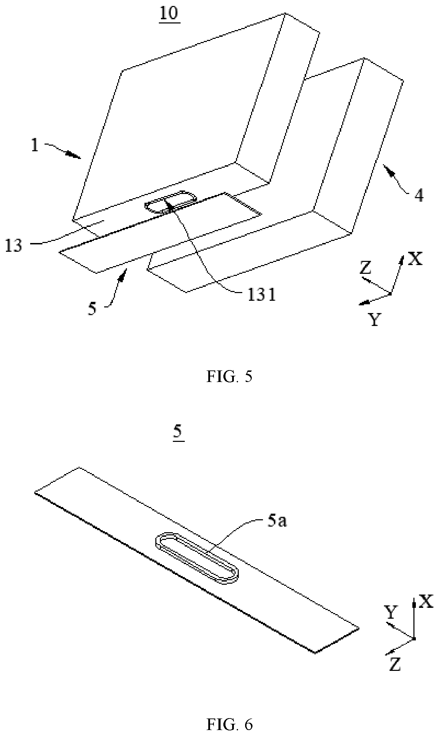

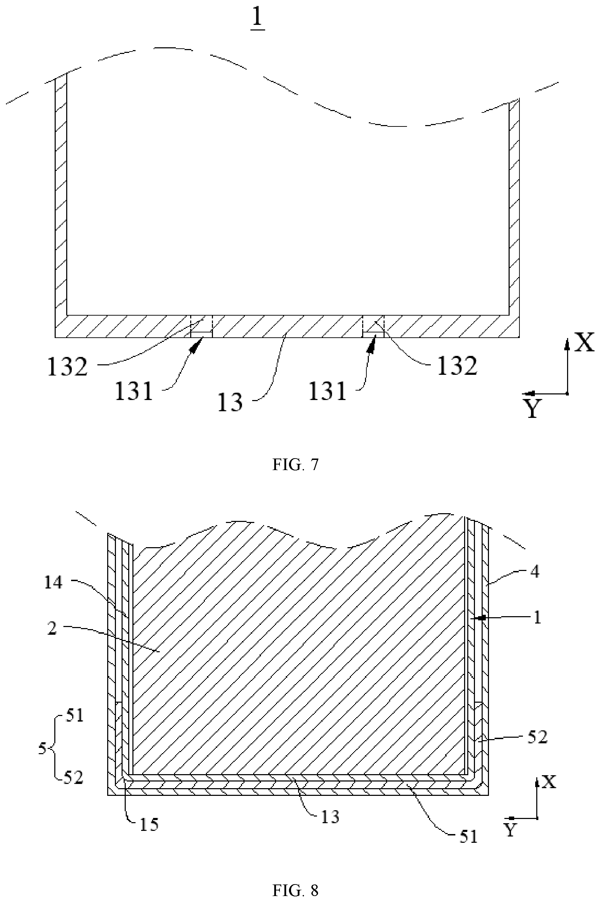

In some embodiments, referring to FIGs. 5, 6, and 7, FIG. 5 is an exploded view of a battery cell 10 according to yet some other embodiments of the present application, FIG. 6 is a schematic structural diagram of a second insulating member 5 in FIG. 5, and FIG. 7 is a schematic structural diagram of a shell 1 in FIG. 5. The outer surface of the first wall 13 is provided with a recess 131, and the second insulating member 5 covers the recess 131.

One or a plurality of recesses 131 may be provided. The recess 131 may be a groove formed in the outer surface of the first wall 13. For example, the recess 131 is a weight reducing groove, a pressure relief groove, or the like formed in the outer surface of the first wall 13. The recess may also be a hole formed in the outer surface of the first wall 13. For example, the recess 131 is a liquid injection hole, a pressure relief hole, or the like formed in the outer surface of the first wall 13. The liquid injection hole is configured to inject the electrolytic solution into the interior of the battery cell 10, the pressure relief hole is configured to mount a pressure relief component, and the pressure relief component may be an anti-explosion valve, an anti-explosion sheet, a safety valve, or the like.

By allowing the second insulating member 5 to cover the recess 131, the second insulating member 5 can provide insulating protection for the region where the recess 131 is provided, thereby enhancing the insulating property of the recess 131.

In some embodiments, a part of the second insulating member 5 is located in the recess 131.

The second insulating member 5 partially forms a protrusion 5a, the protrusion 5a is located in the recess 131, and the protrusion 5a is a part, located in the recess 131, of the second insulating member 5. The protrusion 5a may fill the recess 131, or may fill only a part of the recess 131.

By providing a part of the second insulating member 5 in the recess 131, the second insulating member 5 can be more stably attached to the outer surface of the first wall 13.

In some embodiments, as shown in FIG. 7, the first wall 13 forms a weak part 132 in a region where the recess 131 is provided, and the first wall 13 is configured to be capable of cracking along the weak part 132 to release pressure inside the battery cell 10.

It can be understood that the recess 131 is a pressure relief groove. The weak part 132 is a residual part of the first wall 13 after the recess 131 is provided, and the situation may be that a groove bottom wall of the pressure relief groove is the weak part 132. Taking the case where the recess 131 is a pressure relief groove as an example, the pressure relief groove may be formed in various ways, such as stamping, milling, or the like. The pressure relief groove may include at least one groove segment, and the cross section of the groove segment may be in various shapes, such as rectangular or trapezoidal. The cross section of the groove segment is perpendicular to the extension direction of the groove segment. The pressure relief groove may be in various shapes. For example, the pressure relief groove is a groove extending along an arc trajectory. For another example, the pressure relief groove includes a plurality of groove segments, and the plurality of groove segments may form a U-shaped structure, an H-shaped structure, a V-shaped structure, a Y-shaped structure, an X-shaped structure, a T-shaped structure, or the like.

The formation of the weak part 132 in the recess 131 is beneficial to the cracking of the weak part 132 when the internal pressure of the battery cell 10 increases, such that the first wall 13 has a pressure relief function, which facilitates the release of the internal pressure of the battery cell 10 and reduces the risk of explosion when thermal runaway occurs in the battery cell 10.

In some embodiments, the second insulating member 5 fills the recess 131.

The protrusion 5a of the second insulating member 5 fills the recess 131.

The second insulating member 5 fills the recess 131, such that the gas in the recess 131 can be expelled from the recess 131, thereby reducing the problem of accelerated aging of the second insulating member 5 in the region of the recess 131 due to factors such as partial discharge.

In some embodiments, with further reference to FIG. 4, the second insulating member 5 is entirely located between the first wall 13 and the first insulating member 4.

It can be understood that the second insulating member 5 does not have a part located on other walls of the shell 1.

The situation may be that the second insulating member 5 covers a part of the outer surface of the first wall 13, or that the second insulating member 5 covers the outer surface of the first wall 13 entirely.

The entire second insulating member 5 and the first insulating member 4 jointly cover the outer surface of the first wall 13, which is beneficial to improving the insulating property of the first wall 13.

In some embodiments, referring to FIG. 8, FIG. 8 is a schematic structural diagram of a battery cell 10 according to yet some other embodiments of the present application. A part of the second insulating member 5 is located between the first wall 13 and the first insulating member 4.

The situation may be that a part of the second insulating member 5 is located between the first wall 13 and the first insulating member 4, and another part of the second insulating member 5 is located on the outer side of other walls of the shell 1. The part of the second insulating member 5 located between the first wall 13 and the first insulating member 4 may cover a part of the outer surface of the first wall 13 or cover the outer surface of the first wall entirely.

By providing a part of the second insulating member 5 between the first wall 13 and the first insulating member 4, the second insulating member 5 and the first insulating member 4 jointly cover the outer surface of the first wall 13, thereby improving the insulating property of the first wall. In addition, other parts of the second insulating member 5 may cover other parts of the shell 1, thereby improving the insulating property of other positions of the shell 1.

In some embodiments, with further reference to FIG. 8, the shell 1 is further provided with a side wall 14. The side wall 14 is disposed in an enclosing manner around the first wall 13, and the first wall 13 is connected to one end of the side wall 14 in the thickness direction of the first wall 13. The second insulating member 5 includes a first insulating part 51 and a second insulating part 52. The second insulating part 52 is disposed in an enclosing manner around the first insulating part 51, the first insulating part 51 is connected to one end of the second insulating part 52 in the thickness direction of the first wall 13, the first insulating part 51 is located between the first wall 13 and the first insulating member 4 and covers the outer surface of the first wall 13, the second insulating part 52 is located between the side wall 14 and the first insulating member 4, and the second insulating part 52 is disposed around the side wall 14 and covers at least a part of the outer surface of the side wall 14.

The side wall 14 may include a plurality of walls. Taking the case where the shell 1 is in a rectangular parallelepiped shape as an example, the side wall 14 may include four walls. The four walls are disposed in an enclosing manner around the first wall 13. The four walls may all be walls in the shell body 11, or a part of the four walls may be the end cover 12 and the other part may be walls in the shell body 11. In an embodiment in which the first wall 13 is the end cover 12, the situation may be that four walls in the shell body 11 form the side wall 14. In an embodiment in which the first wall 13 is a wall in the shell body 11, the shell body 11 is provided with five walls, four walls form the side wall 14, and the other wall is the first wall 13.

The outer surface of the side wall 14 and the outer surface of the first wall 13 may be directly connected or indirectly connected. In the embodiment shown in FIG. 8, the outer surface of the side wall 14 is indirectly connected to the outer surface of the first wall 13 via a rounded corner 15.

The first insulating part 51 is a portion, located between the first insulating member 4 and the first wall 13, of the second insulating member 5, and the second insulating part 52 is a portion, located between the first insulating member 4 and the side wall 14, of the second insulating member 5. The first insulating part 51 and the second insulating part 52 may be disposed separately or integrally formed. In an embodiment in which the second insulating member 5 is an insulating coating layer disposed between the shell 1 and the first insulating member 4, the first insulating part 51 and the second insulating part 52 may be integrally formed.

The second insulating part 52 is a structure disposed around the side wall 14, and in the thickness direction of the first wall 13, the second insulating part 52 extends from the first insulating part 51 toward the wall, opposite to the first wall 13, of the shell 1. The second insulating part 52 may cover a part of the outer surface of the side wall 14, or may cover the outer surface of the side wall 14 entirely.

As an example, as shown in FIG. 8, the thickness direction of the first wall 13 is parallel to the first direction X. In the first direction X, the shell 1 is in a rectangular parallelepiped shape, two walls in the side wall 14 are disposed opposite to each other in the second direction Y, and the other two walls in the side wall 14 are disposed opposite to each other in the third direction Z (not shown in FIG. 8).

By providing the first insulating part 51 between the first wall 13 and the first insulating member 4, the insulating property of the first wall 13 can be enhanced through the first insulating member 4 and the first insulating part 51. By providing the second insulating part 52 between the side wall 14 and the first insulating member 4, the insulating property of the side wall 14 can be enhanced through the first insulating member 4 and the second insulating part 52. By providing the second insulating part 52 in an enclosing manner around the first insulating part 51, the second insulating part 52 is disposed on the side wall 14 proximal to the first wall 13, and the first insulating part 51 is connected to one end of the second insulating part 52 in the thickness direction of the first wall 13, such that the second insulating member 5 can wrap the first wall 13 and the junction between the first wall 13 and the side wall 14, thereby improving the insulating property of the first wall 13 of the shell 1 and the side wall 14 of the shell 1 at a position proximal to the first wall 13.

In some embodiments, with further reference to FIGs. 4 and 8, the second insulating member 5 covers the outer surface of the first wall 13 entirely.

By allowing the second insulating member 5 to cover the outer surface of the first wall 13 entirely, the first insulating member 4 and the second insulating member 5 can jointly insulate the outer surface of the first wall 13 entirely, thereby improving the insulating property of the first wall 13 and reducing the risk of breakdown of the insulating layer on the first wall 13.

In some embodiments, the battery cell 10 further includes an electrode assembly 2. The electrode assembly 2 is accommodated in the shell 1, and the first wall 13 is configured to support the electrode assembly 2.

It can be understood that the first wall 13 is located at the bottom of the electrode assembly 2 to bear the gravity of the electrode assembly 2, so as to achieve the purpose of supporting the electrode assembly 2. The first wall 13 may directly support the electrode assembly 2. For example, the first wall 13 is located at the bottom of the electrode assembly 2 and is in direct contact with the electrode assembly 2. The first wall 13 may also indirectly support the electrode assembly 2. For example, a bottom support plate is disposed between the first wall 13 and the electrode assembly 2, and the first wall 13 indirectly supports the electrode assembly 2 through the bottom support plate.

The first wall 13 supports the electrode assembly 2, the first wall 13 is located at the bottom of the electrode assembly 2, and the first insulating member 4 and the second insulating member 5 covering the outer surface of the first wall 13 are located at the bottom of the shell 1. When the shell 1 is supported by an external component, the shell 1 and the external component can be insulated by the first insulating member 4 and the second insulating member 5.

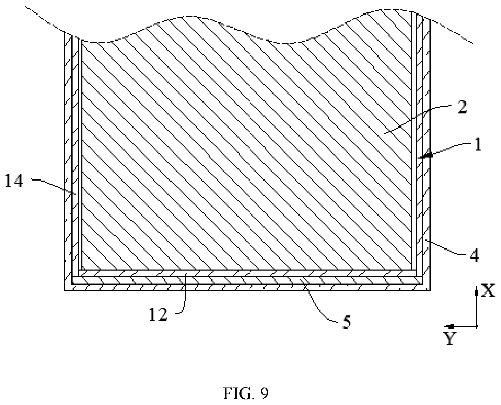

In some embodiments, referring to FIG. 9, FIG. 9 is a schematic structural diagram of a battery cell 10 according to still some other embodiments of the present application. The shell 1 includes a shell body 11 and an end cover 12. The shell body 11 is provided with at least one opening 11a. The end cover 12 is in one-to-one correspondence with the opening 11a, and the end cover 12 closes the opening 11a. At least one end cover 12 is the first wall 13.

The situation may be that the shell body 11 is provided with one opening 11a, and one end cover 12 correspondingly closes the opening 11a; or that the shell body 11 is provided with two openings 11a, two end covers 12 close the two openings 11a of the shell body 11, respectively, and the two end covers 12 can serve as the first wall 13, or one end cover 12 of the two end covers 12 can serve as the first wall 13.

By allowing the second insulating member 5 to cover at least a part of at least one end cover 12, the first insulating member 4 and the second insulating member 5 can jointly improve the insulating property of the at least one end cover 12.

In some embodiments, the shell body 11 is provided with only one opening 11a.

As an example, the shell body 11 is provided with an opening 11a in the first direction X, one end cover 12 lids the opening 11a, the end cover 12 serves as the first wall 13, the second insulating member 5 can wrap the end cover 12 entirely, and the second insulating member 5 can wrap the outer surface of the wall, adjacent to the opening 11a, of the shell body 11.

By allowing the second insulating member 5 to cover the end cover 12 at the opening 11a of the shell body 11, the insulating property at the end cover 12 of the shell 1 can be improved.

In some embodiments, the shell 1 includes a shell body 11 and an end cover 12. The shell body 11 is provided with at least one opening 11a, the end cover 12 is in one-to-one correspondence with the opening 11a, and the end cover 12 closes the opening 11a, where the shell body 11 includes the first wall 13.

The situation may be that the shell body 11 is provided with two openings 11a, and the side wall 14 of the shell 1 includes the end cover 12 and a wall on the shell body 11; or that the shell body 11 is provided with one opening 11a, the first wall 13 is a wall, opposite to the opening 11a, on the shell body 11, and the side wall 14 is a wall on the shell body 11; or that the shell body 11 is provided with one opening 11a, the first wall 13 is a wall, adjacent to the opening 11a, on the shell body 11, and the side wall 14 may be the end cover 12 and a wall on the shell body 11.

By allowing the second insulating member 5 to wrap the first wall 13 on the shell body 11, the insulating property of the first wall 13 on the shell body 11 can be improved.

In some embodiments, the shell body 11 is provided with only one opening 11a, and a wall, opposite to the end cover 12, of the shell body 11 is the first wall 13.

As an example, the shell body 11 is provided with only one opening 11a, the wall, opposite to the end cover 12, of the shell body 11 is the first wall 13, and the side wall 14 is a wall, adjacent to the first wall 13, on the shell body 11.

By providing the wall, opposite to the end cover 12, of the shell body 11 as the first wall 13, the insulating property of the first wall 13 can be improved.

The embodiments of the present application provide a battery 100. The battery 100 includes the battery cell 10 according to any one of the above embodiments.

The embodiments of the present application provide an electric device. The electric device includes the battery cell 10 according to any one of the above embodiments, and the battery cell 10 is configured to supply electric energy to the electric device.

Referring to FIG. 8, the embodiments of the present application further provide a battery cell 10. The battery cell 10 includes a shell 1, a first insulating member 4, and a second insulating member 5. The second insulating member 5 is located between the shell 1 and the first insulating member 4. The bottom wall of the shell 1 is a first wall 13, and the wall, adjacent to the first wall 13, of the shell 1 is a side wall 14. The first insulating member 4 wraps the first wall 13 and the side wall 14 of the shell 1. The second insulating member 5 includes a first insulating part 51 and a second insulating part 52, the first insulating part 51 covers the outer surface of the first wall 13 entirely, and the second insulating part 52 wraps the side wall 14 and is connected to the first insulating part 51, such that the second insulating member 5 wraps the rounded corner 15 between the first wall 13 and side wall 14. The second insulating member 5 is an insulating coating layer.

By providing the first insulating part 51 between the first wall 13 and the first insulating member 4, the insulating property of the first wall 13 can be enhanced. By providing the second insulating part 52 connected to the first insulating part 51 and wrapping a part of the side part, the second insulating member 5 can completely wrap the first wall 13 and the rounded corner 15 between the first wall 13 and the side wall 14, thereby reducing the risk of breakdown of the insulating layer at the first wall 13 and improving the reliability of the battery cell 10.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a shell, provided with a first wall;
a first insulating member, wrapping an outer side of the shell; and
a second insulating member, at least a part of the second insulating member being located between the first wall and the first insulating member and covering at least a part of an outer surface of the first wall.

2. The battery cell according to claim 1, wherein the second insulating member is an insulating coating layer disposed on an outer surface of the shell.

3. The battery cell according to claim 1 or 2, wherein the outer surface of the first wall is provided with a recess, and the second insulating member covers the recess.

4. The battery cell according to claim 3, wherein a part of the second insulating member is located in the recess.

5. The battery cell according to claim 4, wherein the second insulating member fills the recess.

6. The battery cell according to any one of claims 3 to 5, wherein the first wall forms a weak part in a region where the recess is provided, and the first wall is configured to be capable of cracking along the weak part to release pressure inside the battery cell.

7. The battery cell according to any one of claims 1 to 6, wherein the second insulating member is entirely located between the first wall and the first insulating member.

8. The battery cell according to any one of claims 1 to 6, wherein a part of the second insulating member is located between the first wall and the first insulating member.

9. The battery cell according to claim 8, wherein the shell is further provided with a side wall, the side wall is disposed in an enclosing manner around the first wall, and the first wall is connected to one end of the side wall in a thickness direction of the first wall;
the second insulating member comprises a first insulating part and a second insulating part, the second insulating part is disposed in an enclosing manner around the first insulating part, the first insulating part is connected to one end of the second insulating part in the thickness direction of the first wall, the first insulating part is located between the first wall and the first insulating member and covers the outer surface of the first wall, the second insulating part is located between the side wall and the first insulating member, and the second insulating part is disposed around the side wall and covers at least a part of an outer surface of the side wall.

10. The battery cell according to any one of claims 1 to 9, wherein the second insulating member covers the outer surface of the first wall entirely.

11. The battery cell according to any one of claims 1 to 10, wherein the battery cell further comprises an electrode assembly, the electrode assembly is accommodated in the shell, and the first wall is configured to support the electrode assembly.

12. The battery cell according to any one of claims 1 to 10, wherein the shell comprises:
a shell body, provided with at least one opening; and
an end cover, in one-to-one correspondence with the opening, the end cover closing the opening,
wherein at least one end cover is the first wall.

13. The battery cell according to claim 12, wherein the shell body is provided with only one opening.

14. The battery cell according to any one of claims 1 to 11, wherein the shell comprises:
a shell body, provided with at least one opening; and
an end cover, in one-to-one correspondence with the opening, the end cover closing the opening,
wherein the shell body comprises the first wall.

15. The battery cell according to claim 14, wherein the shell body is provided with only one opening, and a wall, opposite to the end cover, of the shell body is the first wall.

16. A battery, comprising the battery cell according to any one of claims 1 to 15.

17. An electric device, wherein the electric device comprises the battery cell according to any one of claims 1 to 15, and the battery cell is configured to supply electric energy to the electric device.
